# EUROPÄISCHE PATENTSCHRIFT

(11) **EP 1 627 176 B1**
(45) Veröffentlichungstag und Bekanntmachung des Hinweises auf die Patenterteilung: **05.03.2008**
(21) Anmeldenummer: 04732960.2
(22) Anmeldetag: 14.05.2004
(51) Int. Cl.: F16L 47/24, F16L 47/14, F16L 23/12, E04G 21/04, B65G 53/52

(54) **TRANSPORTROHR FÜR DICKSTOFFE**
TUBE FOR TRANSPORTING HIGH-VISCOSITY MATERIALS
TUYAU DE TRANSPORT DE LIQUIDES EPAIS

(30) Priorität: 27.05.2003 DE 10324321
(43) Veröffentlichungstag der Anmeldung: 22.02.2006
(60) Teilanmeldung: 07119140.7
(73) Patentinhaber: PUTZMEISTER Aktiengesellschaft, 72631 Aichtal (DE)
(72) Erfinder: WOLFRAM, Markus, 72622 Nürtingen (DE); KASTEN, Knut, 72622 Nürtingen (DE); MÄCKLE, Raimund, 73730 Esslingen (DE); MÜLLER, Dietmar, 32052 Herford (DE); MAURER, Thomas, 68623 Lampertsheim (DE)
(74) Vertreter: Wolf, Eckhard
(86) Internationale Anmeldenummer: PCT/EP2004/005163
(87) Internationale Veröffentlichungsnummer: WO 2004/111518

(56) Entgegenhaltungen:
- EP-A- 0 266 810
- DE-A- 2 419 898
- DE-A- 19 522 540
- DE-A- 19 821 637
- DE-A- 19 914 668
- DE-U- 1 932 448
- FR-A- 2 197 140
- GB-A- 1 396 119
- US-A- 2 219 047
- US-A- 4 366 842

## Beschreibung

Die Erfindung betrifft ein Transportrohr für Dickstoffe, insbesondere für Beton, mit einem Innenrohr aus abriebfestem Kunststoff, mit mindestens einem endseitig auf der Außenseite des Innenrohrs stoffschlüssig fixierten Bundelement, das einen an einem endseitig radial überstehenden Bund axial anschließenden, zum Innenrohr konzentrischen Ringansatz aufweist, sowie mit einer zumindest das Innenrohr umschließenden und mit diesem und mit dem Bundelement verbundenen Verstärkungshülle, wobei der Ringansatz des Bundelements eine wellenförmige Außenfläche mit in axialer Richtung variierendem Außendurchmesser aufweist, und wobei die Verstärkungshülle durch ein außenseitig auf das Innenrohr und den Ringansatz des Bundelements dicht zusammenhängend aufgewickeltes, in eine Kunststoffmatrix eingebettetes Fasergebilde gebildet ist, das mit der Außenfläche des Ringansatzes formschlüssig und gegebenenfalls stoffschlüssig verbunden ist. Ein Transportrohr dieser Art ist beispielsweise aus der EP-A-0266810 bekannt.

In der Bauindustrie werden vielfach mobile Betonpumpen eingesetzt, womit Beton von einer Aufgabestelle über Transportrohre der eingangs angegebenen Art zu einer Ausbringstelle an der Baustelle gefördert wird. Die Transportrohre befinden sich üblicherweise an den Mastarmen eines Verteilermasts, der mit seinem Endschlauch über eine Fernsteuerung zur Betonierstelle dirigiert werden kann. Weiter sind Anwendungsfälle unter Verwendung von stationären Betonpumpen bekannt, bei denen die Transportrohre erdfest von der Aufgabestelle zur Ausbringstelle verlegt werden. Wegen der abrassiven Eigenschaften von strömendem Flüssigbeton müssen die Transportrohre aus einem verschleißarmen Material hergestellt werden. Üblicherweise werden hierfür Stahlrohre verwendet, die innenseitig gehärtet oder verschleißmindemd beschichtet sind.

Der Erfindung liegt die Aufgabe zugrunde, ein Transportrohr für Dickstoffe der eingangs angegebenen Art zu entwickeln, das auch unter hoher Axialbeanspruchung keiner Längenveränderung unterworfen ist.

Zur Lösung dieser Aufgabe wird die im Patentanspruch 1 angegebene Merkmalskombination vorgeschlagen. Vorteilhafte Ausgestaltungen und Weiterbildungen der Erfindung ergeben sich aus den abhängigen Ansprüchen.

Der erfindungsgemäßen Lösung liegt der Gedanke zugrunde, dass der Formschluss zwischen der Verstärkungshülse aus Faserverbundwerkstoff und dem Bundelement durch geeignete Maßnahmen verbessert werden kann. Die erfindungsgemäße Lösung besteht im Wesentlichen darin, dass an das bundseitige Wellental bis zum freien Ende des Ringansatzes mindestens zwei durch ein weiteres Wellental voneinander getrennte Wellenberge anschließen und dass die aufeinander folgenden Wellenberge zum freien Ende des Ringansatzes hin eine abnehmende radiale Höhe aufweisen.

Ein wichtiger Aspekt der Erfindung ist darin zu sehen, dass durch den Formschluss zwischen Verstärkungshülle und Bundelement durch an den Rohren angreifende Axialkräfte keine unerwünschten Längenveränderungen hervorgerufen werden können. Dies wird dadurch erreicht,
- dass der Ringansatz des Bundelements eine Außenfläche mit in axialer Richtung variierendem Außendurchmesser aufweist,
- und dass die Verstärkungshülle durch ein außenseitig auf das Innenrohr und den Ringansatz des Bundelements dicht zusammenhängend aufgewickeltes, in eine Kunststoffmatrix eingebettetes Fasergebilde gebildet ist, das mit der Außenfläche des Ringansatzes formschlüssig und gegebenenfalls stoffschlüssig verbunden ist.

Ein besonderer Vorzug des erfindungsgemäßen Transportrohrs besteht darin, dass es ein besonders niedriges Strukturgewicht und dennoch eine ausreichende Biegesteifigkeit und Druckfestigkeit aufweist.

Weitere Verbesserungen in dieser Hinsicht werden dadurch erreicht,
- dass das Fasergebilde als Faserstrang, Fasertape, Gewebeband oder Matte ausgebildet ist,
- dass das Fasergebilde Fasermaterial der Gruppe Kohlefasern, Glasfasern, Aramidfasern und/oder Polyesterfasern enthält,
- dass das Fasergebilde axial gelegte Kreuzlagen und/oder radial gelegte Umfangslagen aufweist,
- dass der Ringansatz eine in axialer Richtung wellenförmig verlaufende Ausprägung aufweist,
- dass der Ringansatz eine in axialer Richtung trapezförmige, stufenförmige, rillenförmige oder gerändelte Ausprägung aufweist,
- dass das Bundelement mit Stiften versehen ist, um die das Fasergebilde schlaufenförmig gelegt ist,
- dass die Verstärkungshülle und das Bundelement verbolzt sind,
- dass an den beiden Enden des Innenrohrs jeweils ein Bundelement mit außenseitig wellenförmigem Ringansatz angeordnet ist,
- dass der Ringansatz des Bundelements zu seinem dem Bund abgewandten freien Ende hin scharfkantig ausläuft,
- dass die außenseitige Wellenkontur des Ringansatzes zu seinem freien Ende hin flacher wird,
- dass die außenseitige Wellenkontur ein unmittelbar an den Bund axial anschließendes, scharfkantig radial zurückspringendes Wellental aufweist.

Eine ausreichende Abriebfestigkeit gegenüber abrassiven Dickstoffen wird erreicht, wenn das Innenrohr aus Polyurethan beispielsweise mit einer Shore A-Härte von 85 bis 95 besteht. Es ist dabei besonders vorteilhaft, wenn das Innenrohr an das Bundelement vorzugsweise über einen am Bundelement aufgetragenen Haftvermittler oder Primer angegossen ist.

Ebenso kann auch der in die Kunststoffmatrix eingebettete Faserstrang (Roving) unter Bildung einer geschlossenen Verstärkungshülle stoffschlüssig, gegebenenfalls über einen Haftvermittler, mit dem Innenrohr und/oder mit dem Bundelement verbunden sein. Die Kunststoffmatrix besteht zweckmäßig aus einem Reaktionsharz der Gruppe Epoxidharz, Polyesterharz, Vinylharz oder aus einem thermoplastischen Harz. Die Kunststoffmatrix hat die Aufgabe, die Fasern zu stützen und die auf das Rohr nach außen einwirkenden Kräfte auf sie zu verteilen.

Die erfindungsgemäßen Transportrohre eignen sich aufgrund ihres geringen Strukturgewichts für den Einsatz in mobilen oder stationären Betonpumpen mit Betonverteilermast oder langen Transportstrecken, die eine große Anzahl Transportrohre erfordern. Die erfindungsgemäßen Transportrohre können bei gleichem Gewicht um ein mehrfaches länger als die bekannten Transportrohre ausgebildet werden. Die Handhabung bei der Montage und beim Verlegen der Rohre wird dadurch erheblich erleichtert.

Im Folgenden wird die Erfindung anhand der in der Zeichnung in schematischer Weise dargestellten Ausführungsbeispiele näher erläutert. Es zeigen
- Fig. 1: einen Schnitt durch ein gerades Transportrohr mit verschiedenen Bundelementen;
- Fig. 2: einen Rohrbogen mit gleichen Bundelementen;
- Fig. 3: einen vergrößerten Ausschnitt aus einem Transportrohr mit Bundelement.

Die in der Zeichnung dargestellten Verbundrohre sind als Transportrohre für Dickstoffe, insbesondere für Beton für den Einsatz in Betonpumpen bestimmt.

Die Transportrohre bestehen im Wesentlichen aus einem Innenrohr 10 aus abriebfestem Kunststoff, beispielsweise aus Polyurethan, endseitig angeordneten Bundelementen 12 sowie einer das Innenrohr 10 umschließenden und mit diesem und dem Bundelement verbundenen Verstärkungshülle 14. Die aus Metall bestehenden, ringförmigen Bundelemente weisen einen endseitig radial überstehenden Bund 16 und einen axial anschließenden, zum Innenrohr 10 konzentrischen Ringansatz 18 auf. Der Bund ist dazu bestimmt, zwei Transportrohre auf Stoß mittels eines geeigneten, den Bund übergreifenden und einen Trennspalt von außen her überbrückenden Rohrverbinders miteinander zu verbinden, während der Ringansatz 18 eine dichte und dauerhafte Verbindung zwischen Bundelement 12 und den übrigen Teilen des Transportrohrs (Innenrohr 10 und Verstärkungshülle 14) gewährleisten soll.

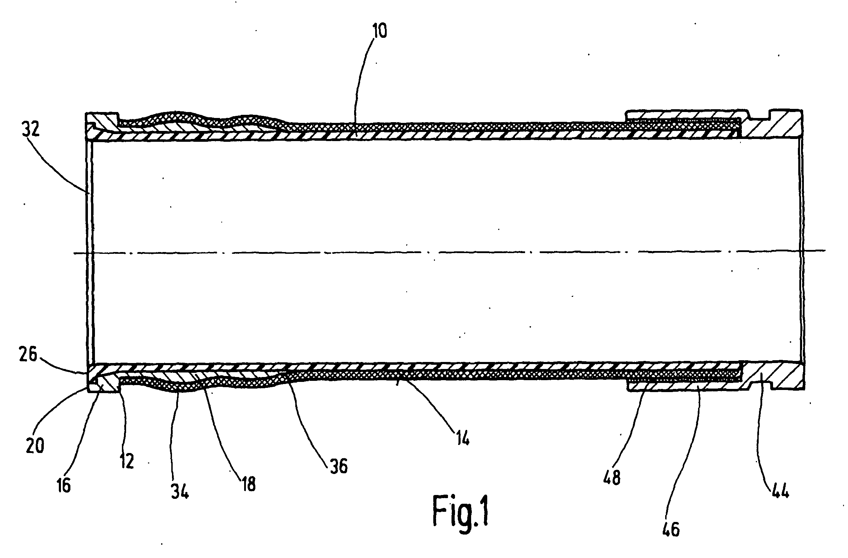

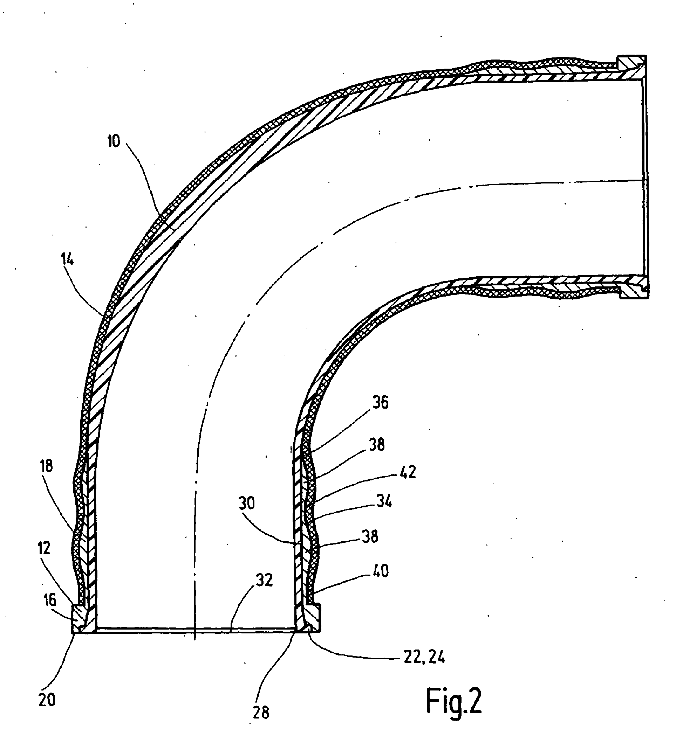

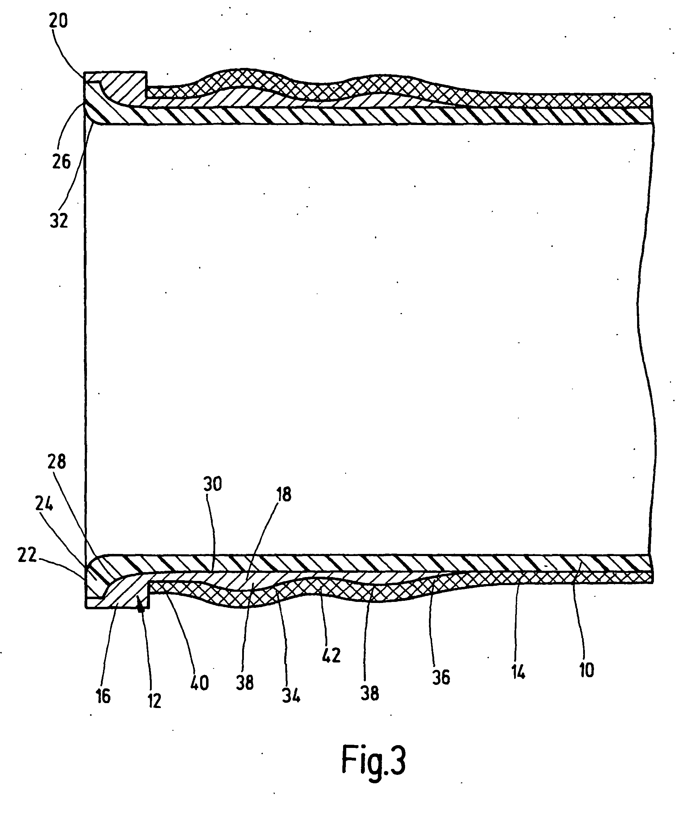

Eine Besonderheit der in der Zeichnung dargestellten Ausführungsformen besteht in den in Fig. 1 links und in Fig. 2 und 3 gezeigten Anschlussstellen zwischen dem Bundelement 12 und dem Innenrohr 10. Der radial überstehende Bund 16 ist dort durch eine stirnseitige Ringfläche 20 und eine sich daran radial nach dem Rohrinneren anschließende, von der Stirnfläche 20 aus axial zurückspringende Ringstufe 22 begrenzt, wobei das Kunststoffmaterial des Innenrohrs 10 vom Rohrinneren her in den durch die Ringstufe 22 des Bundes begrenzten freien Bereich 24 eingreift. Das Kunststoffmaterial füllt den freien Bereich 24 vollständig aus und bildet eine an die Stirnfläche 20 des Bundes radial nach innen fluchtend anschließende Stimflächenpartie 26. Wie insbesondere aus Fig. 3 zu ersehen ist, schließt an der zurückspringenden Begrenzungsfläche der Stufe 22 in axialer Richtung eine schräge oder gekrümmte Übergangsfläche 28 an, die bis zur zylindrischen Innenfläche 30 des Ringansatzes reicht. Entsprechend weist auch die Innenfläche des zylindrischen Innenrohrs 10 eine zur Stimflächenpartie 26 hin trompetenartig divergierende Öffnungsschräge 32 auf. Die genannten Merkmale sorgen dafür, dass der in den gekoppelten Transportrohren strömende Flüssigbeton auf die Verbundstelle zwischen Innenrohr und Bund keine das Innenrohr vom Bundelement abhebenden Scherkräfte ausübt. Etwaiges Dickstoffmaterial, das in den Trennspalt zwischen den Stirnflächen 20 zweier benachbarter Transportrohre eindringt, steht im Bereich der Trennstelle zwischen Innenrohr und Bundelement still, so dass an dieser Stelle keine Verschleiß- oder Abhebkräfte angreifen.

Das Bundelement 12 weist am Ringansatz 18 eine axial wellenförmige Außenfläche 34 auf, während die Verstärkungshülle 14 durch einen außenseitig auf das Innenrohr 10 und den wellenförmigen Ringansatz 18 in Umfangsrichtung dicht zusammenhängend aufgewickelten, in eine Kunststoffmatrix eingebetteten Kohlenfaserstrang (Roving) gebildet ist. Der gewickelte Kohlenfaserstrang ist mit der wellenförmigen Außenfläche 34 des Ringansatzes 18 stoffschlüssig und formschlüssig verbunden. Zu seinem dem Bund 16 abgewandten freien Ende 36 hin läuft der Ringansatz scharfkantig aus, so dass ein glatter Übergang der aufgewickelten Verstärkungshülle 14 gewährleistet ist (vgl. Fig. 3). Weiter wird die außenseitige Wellenkontur 38 des Ringansatzes 18 zu seinem freien Ende hin flacher. Die aufeinander folgenden Wellenberge 38 der Wellenkontur 38 weisen eine zum freien Ende des Ringansatzes 18 abnehmende radiale Höhe auf. Unmittelbar an den Bund 16 schließt ein scharfkantig radial zurückspringendes Wellental 40 an, an das bis zum freien Ende 36 des Ringansatzes zwei durch ein weiteres Wellental 42 voneinander getrennte Wellenberge 38 anschließen. Daraus resultiert ein optimaler Formschluss zwischen Ringansatz 18 und außen liegender Verstärkungshülle 14, so dass auch unter hoher Axialbeanspruchung keine Längenveränderung des Transportrohrs zu befürchten ist. Eine weitere Verbesserung in dieser Hinsicht wird dadurch erzielt, dass das Innenrohr im Zuge der Herstellung an das Bundelement 12 vorzugsweise über einen auf die Innenfläche des Ringansatzes 18 aufgetragenen Haftvermittler oder Primer angegossen wird, während der in die Kunststoffmatrix eingebettete Kohlenfaserstrang unter Bildung einer geschlossenen Verstärkungshülle außenseitig stoffschlüssig mit dem Ringansatz und mit dem Innenrohr verbunden wird.

Bei dem in Fig. 1 gezeigten Ausführungsbeispiel ist nur das am linken Ende gezeigte Bundelement mit einem wellenförmigen Ringansatz 18 versehen. Das rechts dargestellte Bundelement 44 weist an seinem Ringansatz 46 keine Wellenstruktur auf. Es ist mit seinem zylindrischen Ringansatz 46 außenseitig mit einer Klebstoffschicht 48 an der Verstärkungshülle 14 des Transportrohrs angeklebt. Diese Bauweise ist dann zweckmäßig, wenn eine exakte Einstellung der Rohrlänge erwünscht ist, die dadurch erzielt werden kann, dass das Bundelement 44 nachträglich am seitlich noch offenen Rohrstück in einer definierten Position angeklebt wird. Bei dieser Konstruktion des Transportrohrs ist darauf zu achten, dass das linke Bundelement 12 in einer Förderleitung die Einlaufseite und das rechte Bundelement 44 die Auslaufseite bildet. Nur dann ist sichergestellt, dass sich das Innenrohr 10 durch das vorbeiströmende Dickstoffmedium nicht vom Bundelement oder von der Verstärkungshülle abhebt.

Bei dem in Fig. 2 gezeigten Rohrbogen sind an beiden Enden Bundelemente 12 mit wellenförmigem Ringansatz 18 angeordnet. Die Einbaurichtung ist hierbei unerheblich. In Fig. 2 fällt auf, dass das Innenrohr 10 über den Umfang eine variable Wandstärke aufweist. Auf der Außenseite des Rohrbogens ist die Wandstärke größer als auf der Innenseite. Damit wird dem unterschiedlichen Materialverschleiß an der Innen- und der Außenkrümmung des Rohrbogens Rechnung getragen.

### Ausführungsbeispiel 1

Die Herstellung des erfindungsgemäßen Transportrohrs erfolgt nach einem ersten Ausführungsbeispiel in folgenden Verfahrensschritten:
- Mindestens ein vorgefertigtes, mit einem Bund und einem außenseitig wellenförmigen Ringansatz versehenes metallisches Bundteil wird stirnseitig in eine Gießform eingelegt und dort mit einem im ausgehärteten Zustand abriebfesten Reaktionskunststoff unter Bildung eines Innenrohrs mit endseitigem Bund ausgegossen;
- das fertige Innenrohr mit Bund wird mit einem kunststoffgetränkten Kohlenfaserstrang vom einen zum anderen Ende hin unter Einwicklung des außenseitig wellenförmigen Ringeinsatzes und Bildung einer zusammenhängenden Verstärkungshülle umwickelt;
- das fertige Transportrohr wird zur Aushärtung der Kunststoffmatrix und/oder zur Herstellung einer stoffschlüssigen Verbindung mit dem Innenrohr und dem Bundelement zeitweilig erhitzt.

Um auch zwischen Bundelement und Innenrohr eine zuverlässige stoffschlüssige Verbindung zu erhalten, wird das Bundelement an seinen Kontaktflächen mit dem Innenrohr vor dem Gießvorgang mit einem Haftvermittler oder Primer beschichtet. Entsprechend kann auch das Innenrohr und/oder das Bundelement an seinen Kontaktflächen mit dem Mantelrohr vor dem Wickelvorgang mit einem Haftvermittler oder Primer beschichtet werden. Der Kohlenfaserstrang kann beispielsweise mit einer mehrachsigen Wickelmaschine unter Rotation des Innenrohrs um seine Rohrachse aufgewickelt werden. Dazu wird das Innenrohr mit Bund zweckmäßig auf einen Wickelkern drehfest aufgesteckt, während der Wickelkern beim Wickelvorgang um die Achse des Innenrohrs motorisch gedreht wird.

### Ausführungsbeispiel 2

Nach einem zweiten Ausführungsbeispiel erfolgt die Herstellung des Transportrohrs in folgenden Verfahrensschritten:
- Mindestens ein vorgefertigtes, mit einem Bund und einem außenseitig wellenförmigen Ringansatz versehenes Bundelement wird unter Bildung eines CFK-Rohrs mit einem kunststoffgetränkten Kohlenfaserstrang umwickelt;
- sodann wird das so entstandene CFK-Rohr an seiner Innenseite und das Bundelement an seinen freien Kontaktflächen gereinigt und mit einem Haftvermittler beschichtet;
- anschließend wird in das CFK-Rohr mit seinem mindestens einen Bund ein Reaktionskunststoff unter Bildung einer Innenbeschichtung eingebracht und dort ausgehärtet.

Grundsätzlich kann nach der Haftvermittlerbeschichtung ein Kern mit Untermaß in das Innere des mit dem mindestens einen Bund versehenen CFK-Rohrs unter Freilassung eines Ringspalts eingesetzt werden, wobei der Reaktionskunststoff in den Ringspalt eingebracht und dort ausgehärtet und der Kern anschließend wieder entfernt wird.

Alternativ dazu wird auf die mit dem Haftvermittler beschichtete Innenfläche des mit dem mindestens einen Bund versehenen CFK-Rohrs der Reaktionskunststoff aufgespritzt oder aufgeschleudert und anschließend unter Bildung des fertigen Rohrs ausgehärtet. Im letzteren Falle ist kein Kern erforderlich.

## Patentansprüche

1. Transportrohr für Dickstoffe, insbesondere für Beton, mit einem Innenrohr (10) aus abriebfestem Kunststoff, mit mindestens einem endseitig auf der Außenseite des Innenrohrs (10) stoffschlüssig fixierten Bundelement (12), das einen an einem endseitig radial überstehenden Bund (16) axial anschließenden, zum Innenrohr konzentrischen Ringansatz aufweist, sowie mit einer zumindest das Innenrohr umschließenden und mit diesem und mit dem Bundelement (12) verbundenen Verstärkungshülle (14), wobei der Ringansatz (18) des Bundelements eine wellenförmige Außenfläche (34) mit in axialer Richtung variierendem Außendurchmesser aufweist, und wobei die Verstärkungshülle (14) durch ein außenseitig auf das Innenrohr (10) und den Ringansatz des Bundelements (12) dicht zusammenhängend aufgewickeltes, in eine Kunststoffmatrix eingebettetes Fasergebilde gebildet ist, das mit der Außenfläche (34) des Ringansatzes (18) formschlüssig und gegebenenfalls stoffschlüssig verbunden ist, **dadurch gekennzeichnet, dass** an das bundseitige Wellental (40) bis zum freien Ende des Ringansatzes (18) mindestens zwei durch ein weiteres Wellental voneinander getrennte Wellenberge anschließen und dass die aufeinander folgenden Wellenberge zum freien Ende des Ringansatzes hin eine abnehmende radiale Höhe aufweisen.

2. Transportrohr nach Anspruch 1, **dadurch gekennzeichnet, dass** die außenseitige Wellenkontur des Ringsansatzes (18) zu seinem freien Ende hin flacher wird.

3. Transportrohr nach Anspruch 1 oder 2, **dadurch gekennzeichnet, dass** die außenseitige Wellenkontur ein unmittelbar an den Bund axial anschließendes, scharfkantig radial zurückspringendes Wellental aufweist.

4. Transportrohr nach einem der Ansprüche 1 bis 3, **dadurch gekennzeichnet, dass** das Fasergebilde als Faserstrang, Fasertape, Gewebeband oder Matte ausgebildet ist.

5. Transportrohr nach einem der Ansprüche 1 bis 4, **dadurch gekennzeichnet, dass** das Fasergebilde Fasermaterial der Gruppe Kohlefasern, Glasfasern, Aramidfasern und/oder Polyestherfasem enthält.

6. Transportrohr nach einem der Ansprüche 1 bis 5, **dadurch gekennzeichnet, dass** das Fasergebilde axial und/oder radial gelegte Fasertagen aufweist.

7. Transportrohr nach einem der Ansprüche 1 bis 6, **dadurch gekennzeichnet, dass** das Bundelement (12) mit Stiften versehen ist, um die das Fasergebilde schlaufenförmig gelegt ist.

8. Transportrohr nach einem der Ansprüche 1 bis 7, **dadurch gekennzeichnet, dass** die Verstärkungshülle (14) und das Bundelement (12) verbolzt sind.

9. Transportrohr nach einem der Ansprüche 1 bis 8, **dadurch gekennzeichnet, dass** an den beiden Enden des Innenrohrs (10) jeweils ein Bundelement (12) mit außenseitig wellenförmigem Ringansatz (18) angeordnet ist.

10. Transportrohr nach einem der Ansprüche 1 bis 9, **dadurch gekennzeichnet, dass** nur an einem, vorzugsweise dem einlaufseitigen Ende des Innenrohrs (10) ein Bundelement (12) mit außenseitig wellenförmigem Ringansatz (18) angeordnet ist, während am anderen, vorzugsweise auslaufseitigen Ende ein Bundelement (44) mit außenseitig glattem Ringansatz (46) angeklebt ist.

11. Transportrohr nach einem der Ansprüche 1 bis 10, **dadurch gekennzeichnet, dass** das Innenrohr (10) an das Bundelement (12) vorzugsweise über einen am Bundelement aufgetragenen Haftvermittler oder Primer angegossen ist.

12. Transportrohr nach einem der Ansprüche 1 bis 11, **dadurch gekennzeichnet, dass** das in die Kunststoffmatrix eingebettete Fasergebilde unter Bildung einer geschlossenen Verstärkungshülle (14) stoffschlüssig mit dem Innenrohr (10) verbunden ist.

13. Transportrohr nach einem der Ansprüche 1 bis 12, **dadurch gekennzeichnet, dass** für die Kunststoffmatrix ein Kunststoff aus der Gruppe Epoxidharz, Polyestherharz, Vinylharz, thermoplastisches Harz verwendet wird.

14. Transportrohr nach einem der Ansprüche 1 bis 13, **dadurch gekennzeichnet, dass** der Ringansatz (18) des Bundelements (12) zu seinem vom Bund abgewandten freien Ende hin scharfkantig ausläuft.

15. Transportrohr nach einem der Ansprüche 1 bis 14, **dadurch gekennzeichnet, dass** der radial überstehende Bund (16) des Bundelements (12) durch eine ringförmige Stirnfläche (20) und eine sich daran radial nach dem Rohrinneren anschließende, von der Stirnfläche (20) aus axial zurückspringende Ringstufe (22) begrenzt ist und dass das Kunststoffmaterial des Innenrohrs (10) vom Rohrinneren her in die Ringstufe (22) eingreift.

16. Transportrohr nach Anspruch 15, **dadurch gekennzeichnet, dass** das Kunststoffmaterial des Innenrohrs (10) den durch die Ringstufe (22) des Bundes begrenzten freien Bereich (24) ausfüllt und dabei eine an die Stirnfläche (20) des Bundes (16) radial nach innen vorzugsweise fluchtend anschließende Stimflächenpartie (26) bildet.

17. Transportrohr nach Anspruch 15 oder 16, **dadurch gekennzeichnet, dass** an der zurückspringenden Begrenzungsfläche der Ringstufe (22) in axialer Richtung eine schräge oder gekrümmte Übergangsfläche (28) anschließt, die bis zum Innenradius des innenseitig zylindrischen Ringansatzes (18) reicht.

18. Transportrohr nach einem der Ansprüche 15 bis 17, **dadurch gekennzeichnet, dass** die Innenfläche des zylindrischen Innenrohrs (10) eine zur Stirnfläche (20,26) des Bundes (16) hin divergierende Öffnungsschräge oder -krümmung aufweist.

19. Transportrohr nach einem der Ansprüche 1 bis 18, **dadurch gekennzeichnet, dass** das Bundelement (12) aus Metall, vorzugsweise aus Stahl besteht.

20. Transportrohr nach einem der Ansprüche 1 bis 18, **dadurch gekennzeichnet, dass** das Bundelement (12) aus einem mit Fasern verstärkten, vorzugsweise gespritzten oder in einer Pressform hergestellte Kunststoffformteil besteht.

21. Transportrohr nach einem der Ansprüche 1 bis 20, **dadurch gekennzeichnet, dass** das Innenrohr (10) aus abriebfreiem Polyurethan besteht.

22. Verwendung des Transportrohrs nach einem der Ansprüche 1 bis 21 für den Einsatz in Verbindung mit mobilen oder stationären Betonpumpen.

23. Verwendung des Transportrohrs nach einem der Ansprüche 1 bis 21 für den Einsatz an einem Betonverteilermast in mobilen oder stationären Betonpumpen.

## Claims

1. Transport pipe for thick materials, in particular for concrete, the pipe comprising an inner pipe (10) made of abrasion-resistant plastic, at least one collar element (12) which is fixed in a material-bound manner at an end on the exterior of the inner pipe (10) and has an annular extension which is concentric with the inner pipe and axially adjoins a collar (16) projecting radially at an end, and the pipe comprising a reinforcing covering (14) which encloses at least the inner pipe and is joined thereto and to the collar element (12), wherein the annular extension (18) of the collar element has a waved outer surface (34) with an outer diameter which varies in the axial direction, and wherein the reinforcing covering (14) is constituted by a fibre structure which, embedded in a plastic matrix, is wound onto the exterior of the inner pipe (10) and the annular extension of the collar element (12) in a closely cohesive manner and is joined in a form-fitting and, if necessary, material-bound manner to the outer surface (34) of the annular extension (18), **characterized in that** the wave trough (40) at the collar end, as far as the free end of the annular extension (18), is adjoined by two wave crests separated from each other by a further wave trough, and **in that** the successive wave crests are of a radial height which decreases towards the free end of the annular extension.

2. Transport pipe according to Claim 1, **characterized in that** the external wave contour of the annular extension (18) becomes flatter towards its free end.

3. Transport pipe according to either of Claims 1 or 2, **characterized in that** the external wave contour has a wave trough which is set back radially at an acute angle and directly adjoins the collar in the axial direction.

4. Transport pipe according to any one of Claims 1 to 3, **characterized in that** the fibre structure is realized as a fibre skein, fibre tape, fabric strip or mat.

5. Transport pipe according to any one of Claims 1 to 4, **characterized in that** the fibre structure contains fibre material from the group constituted by carbon fibres, glass fibres, aramide fibres and/or polyester fibres.

6. Transport pipe according to any one of Claims 1 to 5, **characterized in that** the fibre structure has axially and/or radially laid fibre plies.

7. Transport pipe according to any one of Claims 1 to 6, **characterized in that** the collar element (12) is provided with pins, around which the fibre structure is laid in the form of loops.

8. Transport pipe according to any one of Claims 1 to 7, **characterized in that** the reinforcing covering (14) and the collar element (12) are bolted together.

9. Transport pipe according to any one of Claims 1 to 8, **characterized in that** the two ends of the inner pipe (10) are respectively provided with a collar element (12) having an externally waved annular extension (18).

10. Transport pipe according to any one of Claims 1 to 9, **characterized in that** a collar element (12) having an externally waved annular extension (18) is provided at only one end, preferably the intake end, of the inner pipe (10), while a collar element (44) having an externally smooth annular extension (46) is bonded onto the other end, preferably the outlet end.

11. Transport pipe according to any one of Claims 1 to 10, **characterized in that** the inner pipe (10) is cast onto the collar element (12), preferably via an adhesion promoter or primer applied to the collar element.

12. Transport pipe according to any one of Claims 1 to 11, **characterized in that** the fibre structure embedded in the plastic matrix is joined in a material-bound manner to the inner pipe (10), thereby forming a closed reinforcing covering (14).

13. Transport pipe according to any one of Claims 1 to 12, **characterized in that**, for the plastic matrix, a plastic from the group constituted by epoxy resin, polyester resin, vinyl resin, thermoplastic resin is used.

14. Transport pipe according to any one of Claims 1 to 13, **characterized in that** the annular extension (18) of the collar element (12) tapers at an acute angle towards its free end facing away from the collar.

15. Transport pipe according to any one of Claims 1 to 14, **characterized in that** the radially projecting collar (16) of the collar element (12) is delimited by an annular end face (20) and an annular step (22) which is set back axially from the end face (20) and adjoins same radially towards the inside of the pipe, and **in that** the plastic material of the inner pipe (10) engages, from the inside of the pipe, in the annular step (22).

16. Transport pipe according to Claim 15, **characterized in that** the plastic material of the inner pipe (10) fills the free area (24) delimited by the annular step (22) of the collar and thereby forms an end-face part (26) which radially inwards, preferably in alignment, adjoins the end face (20) of the collar (16).

17. Transport pipe according to either of Claims 15 or 16, **characterized in that** the set-back delimiting surface of the step (22) adjoins, in the axial direction, a slanted or curved transition surface (28), which extends to the inner radius of the inner cylindrical annular extension (18).

18. Transport pipe according to any one of Claims 15 to 17, **characterized in that** the inner surface of the cylindrical inner pipe (10) has an opening bevel or curvature which diverges towards the end face (20, 26) of the collar (16).

19. Transport pipe according to any one of Claims 1 to 18, **characterized in that** the collar element (12) is composed of metal, preferably of steel.

20. Transport pipe according to any one of Claims 1 to 18, **characterized in that** the collar element (12) is composed of a plastic preformed part which is reinforced with fibres and preferably injection-moulded or produced in a press mould.

21. Transport pipe according to any one of Claims 1 to 20, **characterized in that** the inner pipe (10) is composed of abrasion-resistant polyurethane.

22. Use of the transport pipe according to any one of Claims 1 to 21 for application in combination with mobile or stationary concrete pumps.

23. Use of the transport pipe according to any one of Claims 1 to 21 for application on a concrete distribution mast in mobile or stationary concrete pumps.

## Revendications

1. Conduite de transport pour liquides épais, en particulier pour du béton, comprenant une conduite interne (10) en matière plastique résistant à l'usure, présentant à une extrémité au moins un élément de bride (12) fixé par complémentarité de matière sur la face extérieure de la conduite interne (10), qui présente une saillie annulaire concentrique par rapport à la conduite interné, raccordée axialement à une bride (16) faisant saillie radialement à une extrémité, ainsi qu'une enveloppe de renforcement (14) entourant au moins la conduite interne et reliée à celle-ci et à l'élément de bride (12), la saillie annulaire (18) de l'élément de bride présentant une surface extérieure ondulée (34) avec un diamètre variable dans la direction axiale, et l'enveloppe de renforcement (14) étant formée par une structure fibreuse enroulée à l'extérieur de manière dense en continu sur la conduite interne (10) et la saillie annulaire de l'élément de bride (12), enrobée dans une matrice de plastique, qui est reliée par complémentarité de forme et le cas échéant par complémentarité de matière avec la surface extérieure (34) de la saillie annulaire (18), **caractérisée en ce qu'**au creux de l'ondulation (40) côté bride jusqu'à l'extrémité libre de la saillie annulaire (18), fait suite au moins deux crêtes d'ondulation séparées l'une de l'autre par un autre creux d'ondulation et **en ce que** les crêtes d'ondulation se suivant les unes les autres présentent jusqu'à l'extrémité libre de la saillie annulaire une hauteur radiale diminuant.

2. Conduite de transport selon la revendication 1, **caractérisée en ce que** le contour ondulé extérieur de la saillie annulaire (18) est de plus en plus plat jusqu'à son extrémité libre.

3. Conduite de transport selon la revendication 1 ou 2, **caractérisée en ce que** le contour ondulé extérieur présente un creux d'ondulation radialement en retrait à arêtes vives raccordé de manière axiale directement à la bride.

4. Conduite de transport selon l'une quelconque des revendications 1 à 3, **caractérisée en ce que** la structure fibreuse est conçue en tant que faisceau de fibres, ruban de fibres, ruban textile ou natte.

5. Conduite de transport selon l'une quelconque des revendications 1 à 4, **caractérisée en ce que** la structure fibreuse contient une matière fibreuse du groupe des fibres de carbone, des fibres de verre, des fibres d'aramide et/ou des fibres de polyester.

6. Conduite de transport selon l'une quelconque des revendications 1 à 5, **caractérisée en ce que** la structure fibreuse présente des couches de fibres disposées de manière axiale et/ou radiale.

7. Conduite de transport selon l'une quelconque des revendications 1 à 6, **caractérisée en ce que** l'élément de bride (12) est muni de tiges, autour desquelles la structure fibreuse est disposée sous forme de boucles.

8. Conduite de transport selon l'une quelconque des revendications 1 à 7, **caractérisée en ce que** l'enveloppe de renforcement (14) et l'élément de bride (12) sont boulonnés.

9. Conduite de transport selon l'une quelconque des revendications 1 à 8, **caractérisée en ce qu'**un élément de bride (12) présentant une saillie annulaire (18) ondulée à l'extérieur est respectivement disposé sur les deux extrémités de la conduite interne (10).

10. Conduite de transport selon l'une quelconque des revendications 1 à 9, **caractérisée en ce qu'**un élément de bride (12) présentant une saillie annulaire (18) ondulée à l'extérieur est disposé uniquement sur une extrémité, de préférence l'extrémité côté admission de la conduite interne (10), tandis qu'un élément de bride (44) présentant une saillie annulaire (46) lisse à l'extérieur est collée sur l'autre extrémité de préférence l'extrémité côté sortie.

11. Conduite de transport selon l'une quelconque des revendications 1 à 10, **caractérisée en ce que** la conduite interne (10) est moulée sur l'élément de bride (12) de préférence par l'intermédiaire d'un agent adhésif ou d'une première couche appliqué(e) sur l'élément de bride.

12. Conduite de transport selon l'une quelconque des revendications 1 à 11, **caractérisée en ce que** la structure fibreuse enrobée dans la matrice de plastique est reliée par complémentarité de matière à la conduite interne (10), formant une enveloppe de renforcement (14) fermée.

13. Conduite de transport selon l'une quelconque des revendications 1 à 12, **caractérisée en ce que** pour la matrice de plastique un plastique issu du groupe de la résine époxy, la résine polyester, la résine vinylique, la résine thermoplastique est utilisé.

14. Conduite de transport selon l'une quelconque des revendications 1 à 13, **caractérisée en ce que** la saillie annulaire (18) de l'élément de bride (12) s'étend à arêtes vives jusqu'à son extrémité libre opposée à la bride.

15. Conduite de transport selon l'une quelconque des revendications 1 à 14, **caractérisée en ce que** la bride (16) faisant saillie radialement de l'élément de bride (12) est limitée par une surface avant (20) annulaire et un gradin annulaire (22) raccordé de manière radiale à celle-ci vers l'intérieur de la conduite, en retrait axialement depuis la surface avant (20), et **en ce que** la matière plastique de la conduite interne (10) est engagée depuis l'intérieur de la conduite dans le gradin annulaire (22).

16. Conduite de transport selon la revendication 15, **caractérisée en ce que** la matière plastique de la conduite interne (10) remplit la zone libre (24) délimitée par le gradin annulaire (22) de la bride, et forme à cette occasion un lot de surface avant (26) raccordé à la surface avant (20) de la bride (16) radialement vers l'intérieur de préférence en affleurement avec celle-ci.

17. Conduite de transport selon la revendication 15 ou 16, **caractérisée en ce qu'**une surface de transition (28) oblique ou courbée qui atteint le rayon interne de la saillie annulaire (18) cylindrique à l'intérieur est raccordée à la surface de limitation en retrait du gradin annulaire (22) dans la direction axiale.

18. Conduite de transport selon l'une quelconque des revendications 15 à 17, **caractérisée en ce que** la surface intérieure de la conduite interne cylindrique (10) présente une inclinaison ou une courbure d'ouverture jusqu'à la surface avant (20, 26) de la bride (16).

19. Conduite de transport selon l'une quelconque des revendications 1 à 18, **caractérisée en ce que** l'élément de bride (12) est constitué de métal, de préférence d'acier.

20. Conduite de transport selon l'une quelconque des revendications 1 à 18, **caractérisée en ce que** l'élément de bride (12) est constitué d'une pièce moulée en plastique renforcée par des fibres, de préférence moulée par injection ou fabriquée dans un moule de compression.

21. Conduite de transport selon l'une quelconque des revendications 1 à 20, **caractérisée en ce que** la conduite interne (10) est constituée de polyuréthane résistant à l'usure.

22. Utilisation de la conduite de transport selon l'une quelconque des revendications 1 à 21, pour l'emploi en liaison avec des pompes à béton mobiles ou stationnaires.

23. Utilisation de la conduite de transport selon l'une quelconque des revendications 1 à 21, pour l'emploi sur un mât distributeur de béton dans des pompes à béton mobiles ou stationnaires.
